# EUROPÄISCHE PATENTSCHRIFT

(11) **EP 4 069 544 B1**
(45) Veröffentlichungstag und Bekanntmachung des Hinweises auf die Patenterteilung: **26.06.2024**
(21) Anmeldenummer: 20803832.3
(22) Anmeldetag: 09.11.2020
(51) Int. Cl.: B60K 35/10, B60K 35/22, B60K 35/28, B60K 35/29, B60K 35/60, B60K 35/65, B60K 35/80, B60K 35/81, B60K 35/85

(54) **KONTROLLSYSTEM ZUR ANZEIGE VON INTERAKTIONEN EINER FAHRZEUGGESTENSTEUEREINHEIT MIT EINEM ANWENDER**
CONTROL SYSTEM FOR DISPLAYING INTERACTIONS OF A VEHICLE GESTURE CONTROL UNIT WITH A USER
SYSTÈME DE COMMANDE POUR AFFICHER DES INTERACTIONS D'UNE UNITÉ DE COMMANDE GESTUELLE DE VÉHICULE AVEC UN UTILISATEUR

(30) Priorität: 03.12.2019 DE 102019218741
(43) Veröffentlichungstag der Anmeldung: 12.10.2022
(73) Patentinhaber: VOLKSWAGEN AKTIENGESELLSCHAFT, 38440 Wolfsburg (DE)
(72) Erfinder: ETTE, Bernd, 38442 Wolfsburg (DE)
(86) Internationale Anmeldenummer: PCT/EP2020/081517
(87) Internationale Veröffentlichungsnummer: WO 2021/110366

(56) Entgegenhaltungen:
- DE-A1-102016 121 032
- US-A1- 2015 077 272
- US-A1- 2016 260 270
- US-A1- 2017 237 945
- US-A1- 2018 018 179

## Beschreibung

Die Erfindung betrifft ein Kontrollsystem zur Anzeige von Interaktionen einer Fahrzeuggestensteuereinheit mit einem Anwender sowie ein Fahrzeug mit einem solchen Kontrollsystem.

Neben der klassischen mechanischen Bedienung von einzelnen Bestandteilen von Fahrzeugen werden zunehmend auch Bedienkonzepte berücksichtigt und integriert, welche zumindest teilweise auf Bediengesten eines Anwenders basieren. In der Kraftfahrzeugindustrie werden Gesten sogar bereits recht häufig zur Steuerung von Funktionen eingesetzt und verwendet. Die Rückmeldung, inwiefern eine Geste erfolgreich ausgeführt wurde, erfolgt dabei durch eine unmittelbare Aktion des Kraftfahrzeugs zur Ansteuerung eines Aktors, beispielsweise eines Türschlosses. Im Außenbereich des Fahrzeugs sind die Bereiche einer Gestenausführung wesentlich größer als im Innenbereich. Da eine ausgeführte Geste in diesem Zusammenhang meist von einem näheren Umfeld in Form beispielsweise von anwesenden Personen wahrgenommen wird, resultiert hieraus der Wunsch, mit möglichst wenig Gesten über einen entsprechenden Erfolg beziehungsweise Misserfolg informiert zu werden. Mit anderen Worten möchte der Anwender, welcher die Geste ausgeführt hat, zumindest über einen Zustand einer Gestenerkennung informiert werden. Auch diesbezügliche Fehlzustände des Fahrzeugs sollen frühzeitig angezeigt werden, sodass somit nicht erst eine aufwendige Fahrt zu einer Werkstatt von Nöten ist, um sich die entsprechende fehlerhafte Gestensteuerung erklären zu lassen. Es besteht somit ein Bedarf frühzeitig auf den Bereich einer Gestenerkennung, einer Ausführgeschwindigkeit der Geste und einen Erkennungsstatus zu verweisen. Bezogen auf eine Annäherung des Anwenders, beispielsweise des Fahrers, an das Fahrzeug sind bereits erste intelligente Lichtsteuerungssysteme bekannt. Dabei wird beispielsweise ein Licht am Fahrzeug eingeschaltet, sobald sich der Anwender dem Fahrzeug aus einer bestimmten Richtung annähert. Auch sogenannte "Easy-Open-Funktionen" (Easy-Open = leicht öffnen) sind bereits bekannt, welche auf optische Sensoren basieren und bei denen etwa ein Symbol auf dem Boden in der Nähe des Fahrzeugs projiziert wird, wenn sich der Anwender dem Fahrzeug annähert.

Aus dem Stand der Technik werden nachfolgend einige konkrete Beispiele vorgestellt.

So ist aus der Druckschrift US 9,972,150 B2 ein Verfahren zur Überprüfung der Benutzerabsicht bei der Aktivierung eines Geräts in einem Fahrzeug als bekannt zu entnehmen. Die vorgestellten Fahrzeugsysteme und verwandte Verfahren bieten eine verbesserte Benutzerkontrolle über die Aktivierung von Fahrzeugkomponenten. Die Absicht des Benutzers, eine Aktion auszuführen, kann mithilfe eines oder mehrerer Sensoren erkannt werden. Der Benutzer kann vom Fahrzeug aufgefordert werden, die Absicht durch weiteres Benutzerverhalten zu verifizieren. Die Absicht kann auch bestätigt werden, indem verlangt wird, dass ein Satz von Bedingungen erfüllt ist, bevor die mit der Absicht verbundene Aktion ausgeführt wird. Beispielsweise müssen möglicherweise eine erfasste Geste und eine bestimmte Position eines Schlüsselanhängers festgestellt werden, bevor das Fahrzeug die mit der Absicht verbundene Aktion ausführt.

Aus der Druckschrift US 2016/0193959 A1 ist zudem eine Fahrzeuglampenanordnung zur Erzeugung von animierten Bildern und ein zugehöriges Verfahren als bekannt zu entnehmen. Insbesondere ist eine Fahrzeugpfützenlampenanordnung vorgesehen, welche eine Vielzahl von Lichtprojektoren, die an einem Fahrzeug angeordnet und konfiguriert sind, umfasst, um unterschiedliche beleuchtete Bildmuster auf einer dem Fahrzeug benachbarten Bodenfläche zu beleuchten. Die Fahrzeugpfützenlampenanordnung enthält auch eine Steuerung zum sequentiellen Aktivieren der mehreren Lichtprojektoren, um ein animiertes beleuchtetes Bild auf der Bodenoberfläche zu erzeugen.

Aus der Druckschrift US 2014/0253287 A1 ist zudem ein Fahrzeugfernfunktionssystem und ein Verfahren zum Ausführen eines Fahrzeugbetriebs basierend auf einer Fahrzeug-FOB-Bewegung als bekannt zu entnehmen. Insbesondere ist dabei ein Fahrzeugfernbedienungsfunktionssystem zur Verwendung beim Bewirken von Fahrzeugoperationen auf der Basis einer Bewegung eines Anhängers relativ zu einem Fahrzeug vorgesehen. Das System kann eine Steuerung zum Bestimmen von Orten des Handsenders innerhalb von Zonen in der Nähe des Fahrzeugs auf der Grundlage von drahtlosen Ultrabreitbandsignalen enthalten, die zwischen den Antennen und dem Handsender übertragen werden, wobei die Zonen eine Primärzone und Sekundärzonen enthalten, wobei sich jede Sekundärzone zumindest teilweise innerhalb der primären Zone befindet. Die Steuerung kann konfiguriert sein, um eine Bewegung des Anhängers zwischen sekundären Zonen zu erfassen und ein Steuersignal zur Verwendung beim Bewirken eines Fahrzeugbetriebs basierend auf der erfassten Bewegung zu erzeugen. Es wird auch ein Verfahren bereitgestellt, welches das Senden von drahtlosen Ultrabreitbandsignalen zwischen dem Anhänger und den Antennen, das Erfassen einer Bewegung des Anhängers zwischen sekundären Zonen und das Erzeugen eines Steuersignals zur Verwendung beim Bewirken eines Fahrzeugbetriebs auf der Grundlage der erfassten Bewegung umfassen kann.

Die US 2017/237945 A1 offenbart ein System zur Verbesserung der Sichtbarkeit einer Bodenoberfläche neben einem Fahrzeug. Das System umfasst ein mobiles Kommunikationsgerät, ein tragbares Kommunikationsgerät und eine Steuerlogik, die mit dem mobilen Gerät gekoppelt wird und in der Lage ist, festzustellen, ob es sich bei dem mobilen Kommunikationsgerät um ein autorisiertes Gerät handelt. Eine Anzeigevorrichtung reagiert auf ein Signal, um in Echtzeit ein erkanntes Hindernis oder einen Begrüßungsschriftzug auf oder neben dem Fahrzeug für eine verbesserte Betrachtung durch einen sich nähernden Fußgänger zu erzeugen, wenn der Fußgänger, der das autorisierte Gerät trägt, sich innerhalb eines vorbestimmten Bereichs des mobilen Geräts befindet.

Die US 2016/260270 A1 offenbart ein Tastenfeld mit einer Vielzahl von Schaltern, welches einen numerischen Wert entsprechend einer Benutzereingabe in die Vielzahl von Schaltern identifiziert. Das Tastenfeld kann den Wert an ein Steuergerät senden, das so konfiguriert ist, dass es den Zugriff auf die Fahrzeugentriegelungsfunktion erleichtert.

Die US 2018/018179 A1 offenbart ein Verfahren für das intelligente Einrichten von Fahrzeugsystemen. Ein beispielhaft offenbartes Fahrzeug umfasst erste Sensoren zur Erkennung einer Person innerhalb eines ersten Radius um das Fahrzeug herum, zweite Sensoren zur Erkennung der Person in einem zweiten Radius um das Fahrzeug herum; und einen Boot-Controller. Ein Beispiel-Kofferraumsteuergerät aktiviert die Teilsysteme des Fahrzeugs in einem ersten Modus als Reaktion auf die Erfassung der Person innerhalb des ersten Radius.

Die DE 10 2016 121 032 A1 offenbart ein Verfahren, das auf Gesten beruhende Kommunikationen zwischen einer Vorrichtung und einem Benutzer, der Gesten ausführt, ermöglicht.

Die US 2015/077272 A1 offenbart ein System für ein Fahrzeug, das einem Benutzer eines Fahrzeugs persönliche Komfort-Erinnerungen bietet. Das System greift auf ein System außerhalb des Fahrzeugs zu, wie zum Beispiel ein persönliches elektronisches Gerät des Benutzers, um die persönlichen Komfort-Erinnerungen anzuzeigen. Das System kann auch auf verschiedene externe Anwendungen als Reaktion auf das persönliche elektronische Gerät des Benutzers zugreifen, um die persönlichen Komfort-Erinnerungen als Reaktion auf eine Benutzerauswahl weiter zu verfeinern.

Die bisherigen Lösungen zeigen meist einen Zustand an, welcher sich beispielsweise ausschließlich auf eine Annährung des Anwenders an das Fahrzeug bezieht. Es werden jedoch nur bedingt Bewegungsabläufe detailliert angezeigt. Auch werden Fehlverhalten oder Fehlzustände von eingesetzten Systemen bezogen auf eine Geste nicht detailliert angezeigt.

Der Erfindung liegt nun die Aufgabe zugrunde, ein Kontrollsystem zur Anzeige von Interaktionen eines Fahrzeuggestensteuerungssystems mit einem Anwender bereitzustellen, welches den Anwender auf eine einfache Weise über jeweilige Zustände informiert.

In bevorzugter Ausgestaltung der Erfindung ist vorgesehen, dass ein Kontrollsystem zur Anzeige von Interaktionen einer Fahrzeuggestensteuereinheit mit einem Anwender bereitgestellt wird. Solch ein Kontrollsystem umfasst dabei eine mit einer Fahrzeuggestensteuereinheit eines Fahrzeugs koppelbare Steuer- und Recheneinheit mit Bedienprogramm, ein mit dieser Steuer- und Recheneinheit gekoppeltes Funksystem mit wenigstens einer an dem Fahrzeug vorgehaltenen Sender/Empfängereinheit, welches ausgelegt ist, mittels einer Funkverbindung zu einem von einer Anwender zu tragenden mobilen Sender/Empfängereinheit eine Entfernung des Anwenders zu dem Fahrzeug zu erfassen. In Abhängigkeit einer Entfernung des Anwenders zum Fahrzeug sind dynamische Interaktionen der Fahrzeuggestensteuereinheit des Fahrzeugs mit dem Anwender mittels einer mit der Steuer- und Recheneinheit gekoppelten Anzeigevorrichtung anzeigbar. Je nach mittels der Steuer- und Recheneinheit detektierten Interaktionen ist benutzerdefiniert wenigstens eine gesonderte in dem Bedienprogramm zugewiesene Anzeigeinformation je Interaktion anzeigbar. Auf diese Weise ist es möglich, dass der Anwender auf eine einfache Weise über jeweilige Zustände der Fahrzeuggestensteuereinheit informiert wird, sobald er sich auf das Fahrzeug zu bewegt. Dabei ist zudem aufgrund der zugewiesenen Anzeigeinformation zu einer jeweiligen Interaktion klar erkenntlich, welcher Zustand momentan besteht. Aufgrund dieser vom Anwender dann wahrgenommenen Anzeigeinformation, kann dieser gezielt seinen Anteil an der Interaktion optimieren beziehungsweise generell gestalten, sodass somit eine schnellere Klarheit hinsichtlich einer Bedienfunktion der Fahrzeuggestensteuereinheit herrscht. Auch Bewegungsabläufe im Zusammenhang mit der Gestensteuereinheit sind somit mittels der Anzeigenvorrichtung dem Anwender klar anzeigbar, sodass nicht nur eine simple Annährung an das Fahrzeug, sondern auch ausgeübte Bewegungsabläufe wie beispielsweise eine ausgeführte Geste berücksichtigt werden. Somit kann zudem ein Anwender frühzeitig auf sich einstellende Zustände hingewiesen werden, wobei der Anwender klar und unmissverständlich aufgrund der zugewiesenen Anzeigeinformationen umfangreich in die Lage versetzt wird, folgerichtige Handlungen auszuführen. Das Funksystem mit wenigstens einer an dem Fahrzeug vorgehaltenen Sender/Empfängereinheit kann beispielsweise basierend auf einer Ultra-Breitband-Technologie konzipiert sein, wobei die von dem Anwender zu tragende mobile Sender/Empfängereinheit entsprechend dieser Technologie ausgelegt ist. Mit dem Begriff der Interaktionen einer Fahrzeuggestensteuereinheit mit einem Anwender sind dabei insbesondere jegliche Kommunikationsformen zwischen dem Anwender und der Fahrzeuggestensteuereinheit gemeint. Auch eine nicht erkannte Geste ist somit in gewisser Weise eine Art der Interaktion des Anwenders mit diesem System. Es werden somit in erster Linie Interaktionen angezeigt, die ausgehend vom Anwender eine Reaktion bei der Fahrzeuggestensteuereinheit hervorrufen. Mit anderen Worten kann der Anwender diese Reaktion auf der Anzeigevorrichtung wahrnehmen und je nach Benutzereinstellung interpretieren. Auch keine Reaktion kann somit in gewisser Weise als eine Art von Reaktion aufgefasst werden, wobei diese eben fehlende Reaktion mittels des vorgestellten Kontrollsystems visualisiert darstellbar und anschließend vom Anwender interpretierbar ist.

In weiterer bevorzugter Ausgestaltung der Erfindung ist vorgesehen, dass ein Fahrzeug umfassend ein Kontrollsystem gemäß einem der Ansprüche 1 bis 9 bereitgestellt wird. Die zuvor genannten Vorteile gelten, soweit übertragbar, auch für das vorgestellte Fahrzeug.

Weitere bevorzugte Ausgestaltungen der Erfindung ergeben sich aus den übrigen, in den Unteransprüchen genannten Merkmalen.

Erfindungsgemäß ist vorgesehen, dass die Anzeigenvorrichtung wenigstens eine Lichtelementeinheit mit einzelnen Lichtelementen umfasst, sodass mittels einer Reihenfolge der aufleuchtenden Lichtelemente und/oder mittels einer jeweiligen Lichtintensität der aufleuchtenden Lichtelemente und/oder mittels einer jeweiligen Farbe der aufleuchtenden Lichtelementen jeweilige in dem Bedienprogramm zugewiesene Anzeigeinformationen anzeigbar sind. Aufleuchtende Lichtelemente sind sehr gut wahrnehmbar für den Anwender, welcher beispielsweise der Fahrer des Fahrzeugs sein kann. Insbesondere ein Wechsel von einzelnen aufleuchtenden Lichtelementen ist dazu geeignet, die Aufmerksamkeit des Anwenders auf sich zu ziehen, sodass die zu übermittelnde Anzeigeinformation sicher übermittelbar ist. Je nach Kombination der zuvor genannten Möglichkeiten, also wie und wann die Lichtelemente solch einer Lichtelementeinheit aufleuchten, sind somit unterschiedliche Informationen ausdrückbar. Diese festgelegten Anzeigeinformationen sind derart im Bedienprogramm hinterlegt, dass der Anwender diese vor einer Erstbenutzung des Fahrzeugs einsehen und lernen kann oder sogar selbst mitgestalten beziehungsweise festlegen kann. Je nach Ausführung kann somit auf eine Ambiente-Lichtsteuerung oder eine Türgriffbeleuchtung am Fahrzeug verzichtet werden, da der Anwender aufgrund der leuchtenden Lichtelementeinheit immer einen sicheren Weg zur Fahrzeugtür erkennt. Durch den jeweiligen Ablauf von Lichtsequenzen bekommt der Anwender einen besseren Überblick inwiefern Funktionen reproduzierbar funktionieren, wobei etwaige Fehler solch eine Sequenz unterbrechen können. Eine Unterbrechung einer Sequenz ist dabei besonders gut wahrnehmbar, insbesondere teilweise besser als etwa eine Blinkfrequenz oder eine mehrfach gezeigte Symbolik auf einem Display. Dabei kann vorgesehen sein, dass das vorgestellte System bisherige vorgesehene Beleuchtungsformen ersetzt, sodass diese abgeschafft werden können. Auch kann mittels der vorgestellten Kombination von Merkmalen dieses Kontrollsystems ein unverwechselbares optisches Erlebnis erreicht werden, sodass sich das Fahrzeug beispielsweise auf einem dunklen Parkplatz eindeutig von anderen dort abgestellten Fahrzeugen abhebt. Eine volle Lichtintensität kann beispielsweise erst dann erreicht werden, wenn der Anwender direkt vor der Lichtelementeinheit steht. Somit kann beispielsweise eine Türgriffbeleuchtung dann entfallen.

Zudem ist in einer weiteren Ausgestaltung der Erfindung vorgesehen, dass vor Eintritt des Nutzers in einen Gesteninteraktionsbereich der Fahrzeuggestensteuereinheit zumindest ein erstes Signal mittels der Anzeigenvorrichtung anzeigbar ist. So ein erstes Signal dient somit als eine Art Vorwarnung, dass nunmehr bald ein Bereich rund um das Fahrzeug erreicht wird, in welchem beispielsweise eine Interaktion in Form einer Geste zu einer Aktion am Fahrzeug führen kann. Beispielsweise kann dieses erste Signal ein Aufleuchten aller Lichtelemente sein, wobei die Lichtelemente am Rand dann beispielsweise in roter Farbe aufleuchten, womit dem Anwender somit signalisiert wird, dass zwar eine Geste noch nicht erkannt werden kann, aber er sich bereits in unmittelbarer Reichweite der Fahrzeuggestensteuereinheit befindet. Auch können nur auf einer Seite der Lichtelementeinheit diese rot leuchtenden Lichtelemente aufleuchten, beispielsweise auf einer rechten Seite von einer Sichtweise des Anwenders aus gesehen. Insofern ist auch dieser Bereich in gewisser Weise ein Interaktionsbereich, da auch eine nicht übermittelbare Geste oder der Versuch eine Interaktion darstellen würde. Somit wird der Anwender frühzeitig darüber informiert, ob bereits eine Gestensteuerung möglich ist oder nicht. Auf diese Weise werden also umsonst ausgeführte Gesten vermieden, da der Anwender in Kenntnis dieser Information erst gar nicht versuchen wird diese Gesten auszuführen.

Auch ist in einer weiteren Ausgestaltung der Erfindung vorgesehen, dass bei Eintritt des Nutzers in einen Gesteninteraktionsbereich der Fahrzeuggestensteuereinheit zumindest ein zweites Signal mittels der Anzeigenvorrichtung anzeigbar ist. So ein zweites Signal dient somit als eine Art Warnung, dass nunmehr ein Bereich rund um das Fahrzeug erreicht wird, in welchem beispielsweise eine Interaktion in Form einer Geste zu einer Aktion am Fahrzeug führt. Beispielsweise kann dieses zweite Signal ein Aufleuchten aller mittig angeordneten Lichtelemente sein, wobei die Lichtelemente am Rand, welche zuvor in roter Farbe aufleuchteten, nunmehr ausgeschaltet sind. Dem Anwender wird somit signalisiert, dass nunmehr eine Geste erkannt werden wird und er sich bereits in Reichweite der Fahrzeuggestensteuereinheit befindet. Somit wird der Anwender frühzeitig darüber informiert, ob bereits eine Gestensteuerung möglich ist oder nicht. Auf diese Weise wird der Anwender nunmehr also bewusst eine ausgeführte Geste vollziehen können und sich dabei sicher sein, dass diese auch zu einer gewollten Aktion am Fahrzeug führen wird, vorausgesetzt die Fahrzeuggestensteuereinheit ist in einem funktionstüchtigen und eingeschaltetem Zustand.

Erfindungsgemäß ist vorgesehen, dass mittels einer Anzahl und/oder einer Lichtintensität der aktiven Lichtelemente die jeweilige Entfernung des Anwenders zum Fahrzeug anzeigbar ist, sodass für den Anwender seine aktuelle Position in Bezug auf den Gesteninteraktionsbereich anzeigbar ist. Beispielsweise können rund um das Fahrzeug einen Meter breite Bereiche vorgesehen sein, wobei je Entfernungsmeter vom Fahrzeug ein weiteres Lichtelement aufleuchtet. Der Eintritt in den Neun-Meter-Bereich wird demnach mit dem Aufleuchten von neun Lichtelementen von dem Kontrollsystem quittiert. Überschreitet der Anwender den Bereich von neun zu acht Metern einer Entfernung zum Fahrzeug, erlischt demnach ein Lichtelement. Somit erkennt der Anwender, dass er sich entsprechend auf das Fahrzeug zu bewegt. Je nach Anzahl der leuchtenden Lichtelemente kann somit diese Information folgerichtig interpretiert werden. Beispielsweise kann somit der Anwender detailliert darüber informiert werden, welchen Abstand seine Position zurzeit zum Fahrzeug beträgt, sodass nur dann bestimmte Gesten ausgeführt werden, wenn diese aufgrund des Abstandes auch erkannt werden können. Beispielsweise kann der Eintritt in den Neun-Meter-Bereich um das Fahrzeug die hergestellte Verbindung darstellen, wobei der erkannte Abstand zum Fahrzeug mit dem neunten Lichtelement der Lichtelementeinheit darstellbar ist. Auch kann beispielsweise somit vorgesehen sein, dass jede weitere Annäherung zum Fahrzeug und somit eine immer bessere Erreichbarkeit der Fahrzeuggestensteuereinheit mit einer zunehmenden Lichtintensität beziehungsweise Helligkeit der Lichtelemente vom Kontrollsystem quittiert wird. Auch können die Lichtelemente in Balkenform oder zusammengesetzt zu Balkensymbolen in der Lichtelementeinheit vorgesehen sein, wobei jeder Schritt vom Anwender auf das Fahrzeug zu mit je einem Balken oder mit einem sich langsam vervollständigenden leuchtenden Balken angezeigt wird. Andersherum können diese Balken beziehungsweise allgemein die Lichtelemente hinsichtlich einer Leuchtintensität und Vervollständigung sich auch verringern und somit den Anwender anzeigen, dass eine bestimmte Entfernung vom Fahrzeug bereits eingenommen wurde beziehungsweise dieser Bewegungsablauf kann detailliert und somit leicht vermittelbar für den Anwender visualisiert dargestellt werden, sodass diese Anzeigeninformationen dann zu folgerichtigen Handlungen im Zusammenhang mit auszuführenden Gesten des Anwenders genutzt werden können. Das Erreichen des Gestenbereichs kann beispielsweise mit dem Aufleuchten aller Lichtelemente in der höchsten Intensität angezeigt werden.

Des Weiteren ist in einer weiteren Ausgestaltung der Erfindung vorgesehen, dass nach einem mittels der Steuer- und Recheneinheit detektierten Halt des Anwenders für einen benutzerdefiniert einstellbaren Zeitraum in einer festen Position in Bezug auf das Fahrzeug die Lichtintensität der bis dahin aktivierten Lichtelemente dimmbar und anschließend ausschaltbar sind. Auch somit ist eine individuelle Anzeigeninformation dem Anwender auf einfache und eingängige Weise vermittelbar beziehungsweise übermittelbar. Dieser Zustand signalisiert somit beispielsweise dem Anwender, dass keine weitere Annäherung stattfindet und somit Gesten, welche eine besondere Nähe zum Fahrzeug erfordern, jetzt noch nicht ausgeführt werden sollten, da sie von der Fahrzeuggestensteuereinheit noch nicht erkannt werden können. Wird beispielsweise eine vorgewählte Zeit zur Annäherung überschritten, werden die Lichtelemente entsprechend gedimmt bis sie letztendlich ganz ausgeschaltet sind.

Auch ist in einer weiteren Ausgestaltung der Erfindung vorgesehen, dass eine Fehlbedienung der Fahrzeuggestensteuereinheit des Fahrzeugs durch den Anwender und/oder eine Fehlfunktion der Fahrzeuggestensteuereinheit des Fahrzeugs mittels der Anzeigenvorrichtung anzeigbar ist oder wobei eine Fehlbedienung der Fahrzeuggestensteuereinheit des Fahrzeugs durch den Anwender mittels der Anzeigenvorrichtung anzeigbar ist, wobei die zugewiesene Anzeigeinformationen je nach detektierter Fehlbedienung wenigstens eine Bedieninformation der fehlerhaft ausgeführten Geste des Anwenders umfasst. Somit ist es möglich, den Anwender auf einfachste Weise und vorteilhaft zumindest den erreichten Zustand so zu verdeutlichen, dass hiernach die folgerichtigen Schlüsse gezogen werden können. Dies kann beispielsweise in einer nochmaligen Ausführung der Geste im korrigierten Format resultieren. Beispielsweise können Fehlzustände mit dem neunten Lichtelement in einer anderen Farbe dargestellt werden, wobei die ersten acht Lichtelemente zur Erklärung des Fehlers benutzt werden können. Beispielsweise könnte dies eine Sequenz entsprechend einem von links nach rechts laufendem Lauflichtmuster sein. Fehler in der Geste können auch in einer Aufforderung zur Wiederholung der Geste resultieren. Dies könnte beispielsweise ein kurzes Aufblinken der Lichtelemente sein. Auch das Anlernen einer erfolgten Geste, die noch angelernt wurde, kann sichtbar gemacht werden.

Ferner ist in einer weiteren Ausgestaltung der Erfindung vorgesehen, dass die wenigstens eine Lichtelementeinheit mit einzelnen Lichtelementen als physische Baueinheit und im sichtbaren Außenbereich des Fahrzeugs vorgesehen ist, wobei die einzelnen Lichtelemente LED-Lichtelemente sind, oder wobei die Lichtelementeinheit mit einzelnen Lichtelementen als virtuelle Anordnung auf einem in einer Karosserie des Fahrzeugs integrierbaren Bildschirmeinheit vorgesehen ist, oder wobei die Lichtelementeinheit mit einzelnen Lichtelementen als virtuelle Anordnung mittels einer Projektionsvorrichtung auf wenigstens einer Fahrzeugscheibe vorgesehen ist, oder wobei die Lichtelementeinheit mit einzelnen Lichtelementen als virtuelle Anordnung mittels einer interaktiven Bildschirm-Fahrzeugscheibeneinheit vorgesehen ist. Ein Kontrollsystem kann somit besonders gut und entsprechend einem Baukastenprinzip an jegliche Fahrzeuge, welche über eine Fahrzeuggestensteuereinheit verfügen, nachgerüstet werden. Die virtuelle Anordnung kann beispielsweise Gestensymbole oder sogar kleine Filmsequenzen umfassen, welche dann beispielsweise entsprechende Korrekturgestenbewegungen anzeigen oder auch mithilfe von Farben anzeigen, inwiefern die ausgeführte Geste richtig oder annähernd richtig ausgeführt wurde. Es kann beispielsweise ein Vollgrafikdisplay eingesetzt werden, wobei dieses in den Scheiben oder auch in einer Position der B-Säule einbaubar beziehungsweise vorsehbar ist.

Schlussendlich ist in einer weiteren Ausgestaltung der Erfindung vorgesehen, dass die mobile Sender/Empfängereinheit ausgewählt ist aus: Funkfernbedienungs-Fahrzeugschlüssel-System, mobiles Endgerät mit Sender/Empfängereinheit-Programm. Die vorgestellten Kombinationen verdeutlichen, inwiefern das vorgestellte Kontrollsystem hochflexibel einsetzbar ist, wobei die mobile Sender/Empfängereinheit auch an ein bereits vorhandenes Schlüsselsystem oder eine existierende mobile Einheit nachrüstbar als Bestandteil des Kontrollsystems vorgesehen werden kann, sodass diese dann mit dem System zusammen dem Anwender als Gesamtpaket zur Verfügung gestellt werden können.

Das vorgestellte Kontrollsystem lässt sich in jegliche Fahrzeuge anordnen beziehungsweise integrieren, welche eine Fahrzeuggestensteuereinheit aufweisen. Diese Fahrzeuggestensteuereinheit kann dabei auch in nachgerüsteter Form als ausreichend angesehen werden, um das vorgestellte Kontrollsystem entsprechend der vorgestellten Ausführungsvarianten zu verwenden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Kontrollsystems zur Anzeige von Interaktionen einer Fahrzeuggestensteuereinheit mit einem Anwender;
- Figur 2: eine schematische Darstellung einer Draufsicht auf ein Fahrzeug mit einem Kontrollsystem zur Anzeige von Interaktionen einer Fahrzeuggestensteuereinheit mit einem Anwender;
- Figur 3: eine schematische Darstellung einer Rückansicht auf ein Fahrzeug mit einem Kontrollsystem zur Anzeige von Interaktionen einer Fahrzeuggestensteuereinheit mit einem Anwender;
- Figur 4: eine schematische Darstellung einer Seitenansicht auf ein Fahrzeug mit einem Kontrollsystem zur Anzeige von Interaktionen einer Fahrzeuggestensteuereinheit mit einem Anwender.

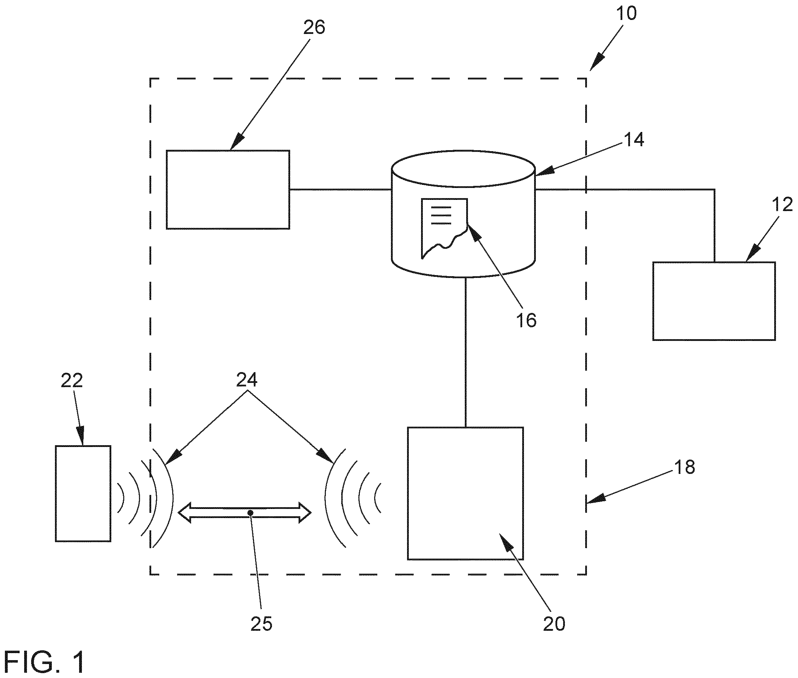

Figur 1 zeigt eine schematische Darstellung eines Kontrollsystems 10 zur Anzeige von Interaktionen einer Fahrzeuggestensteuereinheit 12 mit einem nicht näher dargestellten Anwender. Der Anwender kann beispielsweise der Fahrer des ebenfalls nicht näher dargestellten Fahrzeugs sein, in welchem das Kontrollsystem 10 integriert beziehungsweise angeordnet ist. Dabei ist das Kontrollsystem 10 mit einer Steuer- und Recheneinheit 14 mit einem Bedienprogramm 16 dargestellt, wobei die Steuer- und Recheneinheit 14 mit der Fahrzeuggestensteuereinheit 12 gekoppelt ist. Die Fahrzeuggestensteuereinheit 12 ist dabei außerhalb einer gestrichelten Systemgrenze 18 dargestellt und ist demnach kein Bestandteil des Kontrollsystems 10, wenngleich Informationen von ihr in Richtung der Steuer- und Recheneinheit 14 und umgekehrt übermittelt werden. In einer nicht näher dargestellten Ausführungsform kann diese Fahrzeuggestensteuereinheit 12 auch ein Bestandteil des Kontrollsystems 10 sein und beispielsweise mit diesem dann als Nachrüstset in ein nicht näher dargestelltes Fahrzeug eingebaut beziehungsweise integriert werden. Die Steuer- und Recheneinheit 14 ist zudem mit einem dargestellten Funksystem 20 gekoppelt. Das Funksystem 20 umfasst dabei wenigstens eine nicht näher dargestellte Sender/Empfängereinheit, welche an dem ebenfalls nicht näher dargestellten Fahrzeug vorgesehen ist. So eine Sender/Empfängereinheit kann beispielsweise ein UWB-Gerät umfassen. Es können dabei beliebig viele Sender/Empfängereinheiten an dem Fahrzeug vorgesehen sein, sodass in alle Richtungen des Fahrzeugs eine einwandfreie und zuverlässige Funktionsweise sichergestellt ist. Außerhalb der Systemgrenze 18 ist zudem eine mobile Sender/Empfängereinheit 22 dargestellt. Jeweilige Funkwellen 24 und ein Doppelfpeil 25 verdeutlichen den funktionalen Zusammenhang zwischen dem Funksystem 20 und dieser mobilen Sender/Empfängereinheit 22. Die mobile Sender/Empfängereinheit 22 kann ebenfalls in einer nicht näher dargestellten Ausführungsvariante Bestandteil des vorgestellten Kontrollsystems 10 sein. Diese mobile Sender/Empfängereinheit 22 kann beispielsweise ein Funkfernbedienungs-Fahrzeugschlüssel-System und/oder ein mobiles Endgerät mit Sender/Empfängereinheit-Programm umfassen. Das mit der Steuer- und Recheneinheit 14 gekoppelte Funksystem 20 mit wenigstens einer an dem nicht näher dargestellten Fahrzeug vorgehaltenen ebenfalls in dieser Figur 1 nicht näher dargestellten Sender/Empfängereinheit ist dabei ausgelegt, mittels einer Funkverbindung zu der von einem nicht näher dargestellten Anwender zu tragenden mobilen Sender/Empfängereinheit 22 eine Entfernung des Anwenders zu dem Fahrzeug zu erfassen. Diese Information wird entsprechend der Steuer- und Recheneinheit 14 für eine weitere Verwendung im Sinne des vorgestellten Kontrollsystems 10 übermittelt. Zudem ist schematisch eine zu dem Kontrollsystem 10 zugehörige Anzeigenvorrichtung 26 dargestellt, welche ebenfalls mit der Steuer- und Recheneinheit 14 gekoppelt ist. In Abhängigkeit einer Entfernung des Anwenders zum Fahrzeug sind dynamische Interaktionen der Fahrzeuggestensteuereinheit 12 des Fahrzeugs mit dem Anwender mittels der mit der Steuer- und Recheneinheit 14 gekoppelten Anzeigevorrichtung 26 anzeigbar, wobei je nach mittels der Steuer- und Recheneinheit 14 detektierten Interaktionen benutzerdefiniert wenigstens eine gesonderte in dem Bedienprogramm 16 zugewiesene Anzeigeinformation je Interaktion anzeigbar ist.

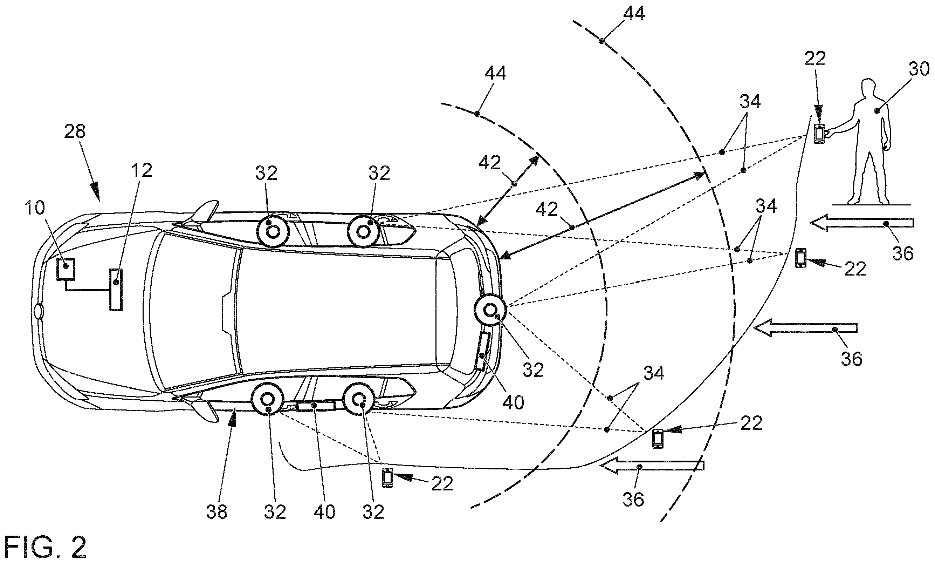

Figur 2 zeigt eine schematische Darstellung einer Draufsicht auf ein Fahrzeug 28 mit einem Kontrollsystem 10 zur Anzeige von Interaktionen einer Fahrzeuggestensteuereinheit 12 mit einem Anwender 30. Dabei sind jeweilige systemeigene Sender/Empfängereinheiten 32 in Form von UWB-Sendeempfängern rund um das Fahrzeug 28 dargestellt, wobei jeweils zwei an jeder Seite und eine an der Rückseite des Fahrzeugs 28 angeordnet sind. Diese systemeigenen Sender/Empfängereinheiten 32 können beispielsweise im sichtbaren Außenbereich des Fahrzeugs 28 vorgesehen sein oder in das Fahrzeug 28 derart integriert sein, dass sie von außen nicht weiter oder zumindest nur teilweise visuell erkennbar sind. Die systemeigenen Sender/Empfängereinheiten 32 sind zudem Bestandteile eines in dieser Figur 2 nicht näher dargestellten Funksystems, welches entsprechend den Erläuterungen von Figur 1 mit einer ebenfalls in Figur 2 nicht näher dargestellten Steuer- und Recheneinheit gekoppelt ist. Der dargestellte Anwender 30 trägt in seiner Hand eine mobile Sender/Empfängereinheit 22 in Form eines mobilen Endgeräts mit Sender/Empfängereinheit-Programm. Es kann sich dabei beispielsweise um ein Mobiltelefon mit einer entsprechenden installierten Applikation handeln. Dargestellte Funkwellenwege 34 verdeutlichen den funktionalen Zusammenhang zwischen der mobilen Sender/Empfängereinheit 22 und den systemeigenen Sender/Empfängereinheiten 32. Bewegungspfeile 36 des Anwenders 30 verdeutlichen seinen möglichen Weg zu einer Fahrertür 38 des Fahrzeugs 28. Der Übersicht halber sind auf den einzelnen Positionen auf diesem Weg lediglich Standorte in Form von dargestellten mobilen Sender/Empfängereinheiten 22 dargestellt. An dem Fahrzeug 28 sind zudem zu einer nicht näher dargestellten Anzeigevorrichtung zugehörige Lichtelementeinheiten 40 dargestellt. Diese Lichtelementeinheiten 40 sind dabei jeweils im Wesentlichen in rechteckiger und länglicher Form dargestellt und umfassen nicht näher dargestellte Lichtelemente. Auf dem Weg hin zum Fahrzeug 28 verändert sich der Abstand beziehungsweise die Entfernung des Anwenders 30 zu dem Fahrzeug 28, wobei damit zusammenhängenden Gesteninteraktionsbereiche mittels der Lichtelementeinheiten 40 dem Anwender anzeigbar sind. Beispielsweise können rund um das Fahrzeug 28 einen Meter breite Bereiche vorgesehen sein, wobei je Entfernungsmeter vom Fahrzeug 28 ein weiteres Lichtelement aufleuchtet. Diese Abstände sind in der Figur 2 mittels Abstandspfeile 42 und schematischen Abstandslinien 44 dargestellt. Der Eintritt in den Neun-Meter-Bereich wird demnach mit dem Aufleuchten von neun Lichtelementen von dem Kontrollsystem 10 quittiert. Überschreitet der Anwender 30 den Bereich von neun zu acht Metern einer Entfernung zum Fahrzeug 28, erlischt demnach ein Lichtelement. Somit erkennt der Anwender 30, dass er sich entsprechend auf das Fahrzeug 28 zu bewegt. Je nach Anzahl der leuchtenden Lichtelemente kann somit diese Information folgerichtig interpretiert werden. Beispielsweise kann somit der Anwender 30 detailliert darüber informiert werden, welchen Abstand seine Position zurzeit zum Fahrzeug 28 beträgt, sodass nur dann bestimmte Gesten ausgeführt werden, wenn diese aufgrund des Abstandes auch erkannt werden können. Beispielsweise kann der Eintritt in den Neun-Meter-Bereich um das Fahrzeug 28 die hergestellte Verbindung darstellen, wobei der erkannte Abstand zum Fahrzeug 28 mit dem 9. Lichtelement der Lichtelementeinheit 40 darstellbar ist. Auch kann beispielsweise somit vorgesehen sein, dass jede weitere Annäherung zum Fahrzeug 28 und somit eine immer bessere Erreichbarkeit der Fahrzeuggestensteuereinheit 12 mit einer zunehmenden Lichtintensität beziehungsweise Helligkeit der Lichtelemente vom Kontrollsystem 10 quittiert wird. Auch können die Lichtelemente in Balkenform oder zusammengesetzt zu Balkensymbolen in der Lichtelementeinheit 40 vorgesehen sein, wobei jeder Schritt vom Anwender 30 auf das Fahrzeug 28 zu mit je einem Balken oder mit einem sich langsam vervollständigenden leuchtenden Balken angezeigt wird. Andersherum können diese Balken beziehungsweise allgemein die Lichtelemente hinsichtlich einer Leuchtintensität und Vervollständigung sich auch verringern und somit den Anwender anzeigen, dass eine bestimmte Entfernung vom Fahrzeug 28 bereits eingenommen wurde beziehungsweise dieser Bewegungsablauf kann detailliert und somit leicht vermittelbar für den Anwender 30 visualisiert dargestellt werden, sodass diese Anzeigeinformationen dann zu folgerichtigen Handlungen im Zusammenhang mit auszuführenden Gesten des Anwenders 30 genutzt werden können. Das Erreichen des Gestenbereichs kann beispielsweise mit dem Aufleuchten aller Lichtelemente in der höchsten Intensität angezeigt werden.

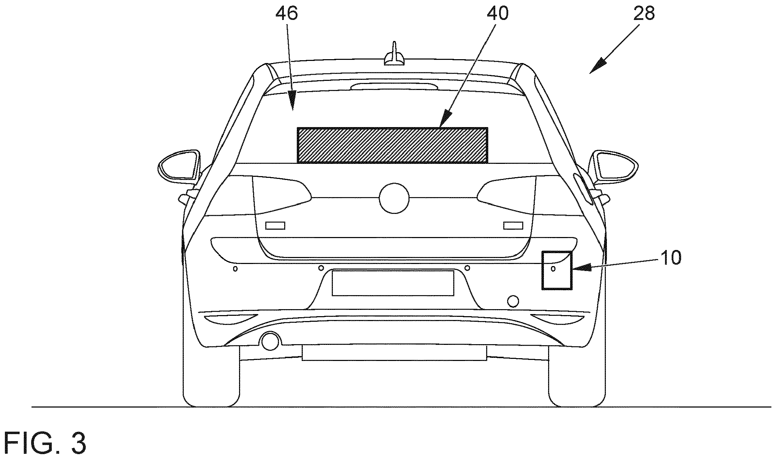

Figur 3 zeigt eine schematische Darstellung einer Rückansicht auf ein Fahrzeug 28 mit einem Kontrollsystem 10 zur Anzeige von Interaktionen einer nicht näher dargestellten Fahrzeuggestensteuereinheit mit einem ebenfalls nicht näher dargestellten Anwender. Die zuvor verwendeten Bezugszeichen gelten auch für diese Figur 3, sodass diese nicht gesondert eingeführt werden. In diesem Ausführungsbeispiel ist eine zu dem Kontrollsystem 10 zugehörige Lichtelementeinheit 40 in eine Rückscheibe 46 des Fahrzeugs 28 integriert.

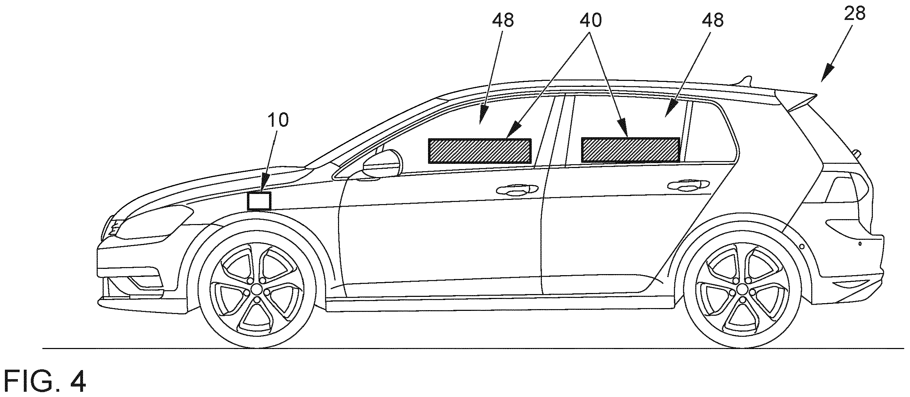

Figur 4 zeigt eine schematische Darstellung einer Seitenansicht auf ein Fahrzeug 28 mit einem Kontrollsystem 10 zur Anzeige von Interaktionen einer nicht näher dargestellten Fahrzeuggestensteuereinheit mit einem ebenfalls nicht näher dargestellten Anwender. Die zuvor verwendeten Bezugszeichen gelten auch für diese Figur 4, sodass diese nicht gesondert eingeführt werden. In diesem Ausführungsbeispiel ist eine zu dem Kontrollsystem 10 zugehörige Lichtelementeinheit 40 in jeweilige Seitenscheiben 48 des Fahrzeugs 28 integriert.

### Bezugszeichenliste

- 10: Kontrollsystem
- 12: Fahrzeuggestensteuereinheit
- 14: Steuer- und Recheneinheit
- 16: Bedienprogramm
- 18: Systemgrenze
- 20: Funksystem
- 22: mobile Sender/Empfängereinheit
- 24: Funkwelle
- 25: Doppelpfeil
- 26: Anzeigevorrichtung
- 28: Fahrzeug
- 30: Anwender
- 32: systemeigene Sender/Empfängereinheit
- 34: Funkwellenweg
- 36: Bewegungspfeil
- 38: Fahrertür
- 40: Lichtelementeinheit
- 42: Abstandspfeil
- 44: Abstandslinie
- 46: Rückscheibe
- 48: Seitenscheibe

## Patentansprüche

1. Kontrollsystem (10) zur Anzeige von Interaktionen einer Fahrzeuggestensteuereinheit (12) mit einem Anwender umfassend eine mit einer Fahrzeuggestensteuereinheit (12) eines Fahrzeugs koppelbaren Steuer- und Recheneinheit (14) mit Bedienprogramm (16), ein mit dieser Steuer- und Recheneinheit (14) gekoppeltem Funksystem (20) mit wenigstens einer an dem Fahrzeug (28) vorgehaltenen Sender/Empfängereinheit (32), welches ausgelegt ist, mittels einer Funkverbindung zu einer von einem Anwender zu tragenden mobilen Sender/Empfängereinheit (22) eine Entfernung des Anwenders zu dem Fahrzeug (28) zu erfassen, wobei
in Abhängigkeit einer Entfernung des Anwenders (30) zum Fahrzeug (28) dynamische Interaktionen der Fahrzeuggestensteuereinheit (12) des Fahrzeugs (28) mit dem Anwender mittels einer mit der Steuer- und Recheneinheit (14) gekoppelten Anzeigevorrichtung (26) anzeigbar sind, wobei je nach mittels der Steuer- und Recheneinheit (14) detektierten Interaktionen benutzerdefiniert wenigstens eine gesonderte in dem Bedienprogramm (16) zugewiesene Anzeigeinformation je Interaktion anzeigbar ist, **dadurch gekennzeichnet, dass**
die Anzeigenvorrichtung (26) wenigstens eine Lichtelementeinheit (40) mit einzelnen Lichtelementen umfasst, sodass mittels einer Reihenfolge der aufleuchtenden Lichtelemente und/oder mittels einer jeweiligen Lichtintensität der aufleuchtenden Lichtelemente und/oder mittels einer jeweiligen Farbe der aufleuchtenden Lichtelemente jeweilige in dem Bedienprogramm (16) zugewiesene Anzeigeinformationen anzeigbar sind und dass mittels einer Anzahl und/oder einer Lichtintensität der aktiven Lichtelemente die jeweilige Entfernung des Anwenders (30) zum Fahrzeug (28) anzeigbar ist, sodass für den Anwender (30) seine aktuelle Position in Bezug auf den Gesteninteraktionsbereich anzeigbar ist.

2. Kontrollsystem (10) nach einem der vorherigen Ansprüche, wobei vor Eintritt des Nutzers in einen Gesteninteraktionsbereich der Fahrzeuggestensteuereinheit (12) zumindest ein erstes Signal mittels der Anzeigenvorrichtung (26) anzeigbar ist.

3. Kontrollsystem (10) nach einem der vorherigen Ansprüche, wobei bei Eintritt des Nutzers in einen Gesteninteraktionsbereich der Fahrzeuggestensteuereinheit (12) zumindest ein zweites Signal mittels der Anzeigenvorrichtung (26) anzeigbar ist.

4. Kontrollsystem (10) nach Anspruch 1, wobei nach einem mittels der Steuer- und Recheneinheit (14) detektierten Halt des Anwenders (30) für einen benutzerdefiniert einstellbaren Zeitraum in einer festen Position in Bezug auf das Fahrzeug (28) die Lichtintensität der bis dahin aktivierten Lichtelemente dimmbar und anschließend ausschaltbar sind.

5. Kontrollsystem (10) nach einem der vorherigen Ansprüche, wobei eine Fehlbedienung der Fahrzeuggestensteuereinheit (12) des Fahrzeugs (28) durch den Anwender (30) und/oder eine Fehlfunktion der Fahrzeuggestensteuereinheit (12) des Fahrzeugs (28) mittels der Anzeigenvorrichtung (26) anzeigbar ist, oder wobei eine Fehlbedienung der Fahrzeuggestensteuereinheit (12) des Fahrzeugs (28) durch den Anwender (30) mittels der Anzeigenvorrichtung (26) anzeigbar ist, wobei die zugewiesene Anzeigeinformationen je nach detektierter Fehlbedienung wenigstens eine Bedieninformation der fehlerhaft ausgeführten Geste des Anwenders (30) umfasst.

6. Kontrollsystem (10) nach einem der vorherigen Ansprüche, wobei die wenigstens eine Lichtelementeinheit (40) mit einzelnen Lichtelementen als physische Baueinheit und im sichtbaren Außenbereich des Fahrzeugs (28) vorgesehen ist, wobei die einzelnen Lichtelemente LED-Lichtelemente sind, oder wobei die Lichtelementeinheit (40) mit einzelnen Lichtelementen als virtuelle Anordnung auf einem in einer Karosserie des Fahrzeugs (28) integrierbaren Bildschirmeinheit vorgesehen ist, oder wobei die Lichtelementeinheit (40) mit einzelnen Lichtelementen als virtuelle Anordnung mittels einer Projektionsvorrichtung auf wenigstens einer Fahrzeugscheibe vorgesehen ist, oder wobei die Lichtelementeinheit (40) mit einzelnen Lichtelementen als virtuelle Anordnung mittels einer interaktiven Bildschirm-Fahrzeugscheibeneinheit vorgesehen ist.

7. Kontrollsystem (10) nach einem der vorherigen Ansprüche, wobei die mobile Sender/Empfängereinheit (22) ausgewählt ist aus: Funkfernbedienungs-Fahrzeugschlüssel-System, mobiles Endgerät mit Sender/Empfängereinheit-Programm.

8. Fahrzeug (28) umfassend ein Kontrollsystem (10) gemäß einem der Ansprüche 1 bis 7.

## Claims

1. Monitoring system (10) for displaying interactions of a vehicle gesture control unit (12) with a user, comprising a control and computing unit (14), which is able to be coupled to a vehicle gesture control unit (12) of a vehicle, comprising an operating program (16), a radio system (20) that is coupled to this control and computing unit (14) and comprises at least one transmitter/receiver unit (32) that is provided on the vehicle (28) and is configured to detect a distance of the user from the vehicle (28) by means of a radio connection to a mobile transmitter/receiver unit (22) to be carried by a user, wherein,
depending on a distance of the user (30) from the vehicle (28), dynamic interactions of the vehicle gesture control unit (12) of the vehicle (28) with the user are able to be displayed by means of a display device (26) coupled to the control and computing unit (14), wherein, depending on interactions detected by means of the control and computing unit (14), at least one separate item of display information assigned in the operating program (16) is able to be displayed for each interaction in a user-defined manner, **characterized in that**
the display device (26) comprises at least one light element unit (40) comprising individual light elements, with the result that respective items of display information assigned in the operating program (16) are able to be displayed by means of a sequence of the lit-up light elements and/or by means of a respective light intensity of the lit-up light elements and/or by means of a respective colour of the lit-up light elements, and **in that** the respective distance of the user (30) from the vehicle (28) is able to be displayed by means of a number and/or a light intensity of the active light elements, with the result that it is possible to display to the user (30) their current position in relation to the gesture interaction region.

2. Monitoring system (10) according to the preceding claim, wherein at least a first signal is able to be displayed by means of the display device (26) before the user enters a gesture interaction region of the vehicle gesture control unit (12).

3. Monitoring system (10) according to either of the preceding claims, wherein at least a second signal is able to be displayed by means of the display device (26) when the user enters a gesture interaction region of the vehicle gesture control unit (12).

4. Monitoring system (10) according to Claim 1, wherein, after the control and computing unit (14) has detected that the user (30) has remained in a fixed position in relation to the vehicle (28) for a period that is able to be set in a user-defined manner, the light intensity of the previously activated light elements is able to be dimmed and subsequently is able to be switched off.

5. Monitoring system (10) according to one of the preceding claims, wherein incorrect operation of the vehicle gesture control unit (12) of the vehicle (28) by the user (30) and/or a malfunction of the vehicle gesture control unit (12) of the vehicle (28) is able to be displayed by means of the display device (26), or wherein incorrect operation of the vehicle gesture control unit (12) of the vehicle (28) by the user (30) is able to be displayed by means of the display device (26), wherein, depending on the incorrect operation detected, the assigned display information comprises at least one item of operating information regarding the incorrectly executed gesture of the user (30).

6. Monitoring system (10) according to one of the preceding claims, wherein the at least one light element unit (40) comprising individual light elements is provided as a physical structural unit and in the visible outer region of the vehicle (28), wherein the individual light elements are LED light elements, or wherein the light element unit (40) comprising individual light elements is provided as a virtual arrangement on a screen unit that is able to be integrated in a body of the vehicle (28), or wherein the light element unit (40) comprising individual light elements is provided as a virtual arrangement by means of a projection device on at least one vehicle window, or wherein the light element unit (40) comprising individual light elements is provided as a virtual arrangement by means of an interactive screen vehicle window unit.

7. Monitoring system (10) according to one of the preceding claims, wherein the mobile transmitter/receiver unit (22) is selected from: a radio remote control vehicle key system and a mobile terminal comprising a transmitter/receiver unit program.

8. Vehicle (28) comprising a monitoring system (10) according to one of Claims 1 to 7.

## Revendications

1. Système de contrôle (10) permettant d'afficher des interactions d'une unité de commande gestuelle de véhicule (12) avec un utilisateur, comprenant une unité de commande et de calcul (14) pouvant être couplée à une unité de commande gestuelle de véhicule (12) et pourvue d'un programme de commande (16), un système radio (20) couplé à cette unité de commande et de calcul (14) et pourvu d'au moins une unité d'émission/réception (32) fournie au niveau du véhicule (28), qui est conçu pour détecter au moyen d'une liaison radio avec une unité d'émission/réception (22) mobile à porter par un utilisateur une distance de l'utilisateur par rapport au véhicule (28), dans lequel
en fonction d'une distance de l'utilisateur (30) par rapport au véhicule (28), des interactions dynamiques de l'unité de commande gestuelle de véhicule (12) du véhicule (28) avec l'utilisateur peuvent être affichées au moyen d'un dispositif d'affichage (26) couplé à l'unité de commande et de calcul (14), dans lequel, en fonction des interactions détectées au moyen de l'unité de commande et de calcul (14), de manière définie par l'utilisateur, au moins une information d'affichage séparée, attribuée dans le programme de commande (16), peut être affichée pour chaque interaction,
**caractérisé en ce que** le dispositif d'affichage (26) comprend au moins une unité d'éléments lumineux (40) pourvue d'éléments lumineux individuels de sorte qu'au moyen d'une séquence des éléments lumineux qui s'éclairent et/ou au moyen d'une intensité de lumière respective des éléments lumineux qui s'éclairent et/ou au moyen d'une couleur respective des éléments lumineux qui s'éclairent, des informations d'affichage respectives, attribuées dans le programme de commande (16), peuvent être affichées, et **en ce qu'**au moyen d'un nombre et/ou d'une intensité de lumière des éléments lumineux actifs, la distance respective de l'utilisateur (30) par rapport au véhicule (28) peut être affichée de sorte que l'utilisateur (30) peut afficher sa position actuelle par rapport à la zone d'interaction gestuelle.

2. Système de contrôle (10) selon l'une quelconque des revendications précédentes, dans lequel au moins un premier signal peut être affiché au moyen du dispositif d'affichage (26) avant que l'utilisateur n'entre dans la zone d'interaction gestuelle de l'unité de commande gestuelle de véhicule (12).

3. Système de contrôle (10) selon l'une quelconque des revendications précédentes, dans lequel au moins un deuxième Signal peut être affiché au moyen du dispositif d'affichage (26) lorsque l'utilisateur entre dans une zone d'interaction gestuelle de l'unité de commande gestuelle de véhicule (12).

4. Système de contrôle (10) selon la revendication 1, dans lequel, après un arrêt de l'utilisateur (30), détecté au moyen de l'unité de commande et de calcul (14), pendant une période réglable de manière définie par l'utilisateur, dans une position fixe par rapport au véhicule (28), l'intensité lumineuse des éléments lumineux activés jusque-là peut être atténuée et ceux-ci peuvent ensuite être éteints.

5. Système de contrôle (10) selon l'une quelconque des revendications précédentes, dans lequel une erreur de manipulation de l'unité de commande gestuelle de véhicule (12) du véhicule (28) par l'utilisateur (30) et/ou un dysfonctionnement de l'unité de commande gestuelle de véhicule (12) du véhicule (28) peuvent être affichés au moyen du dispositif d'affichage (26), ou dans lequel une erreur de manipulation de l'unité de commande gestuelle de véhicule (12) du véhicule (28) par l'utilisateur (30) peut être affichée au moyen du dispositif d'affichage (26), dans lequel les informations d'affichage attribuées selon l'erreur de manipulation détectée comprennent au moins une information de commande du geste mal exécutée de l'utilisateur (30).

6. Système de contrôle (10) selon l'une quelconque des revendications précédentes, dans lequel ladite au moins une unité d'éléments lumineux (40) avec des éléments lumineux individuels est prévue sous forme d'unité modulaire physique et dans la zone extérieure visible du véhicule (28), les éléments lumineux individuels étant des éléments lumineux LED, ou dans lequel l'unité d'éléments lumineux (40) avec des éléments lumineux individuels est prévue sous forme d'agencement virtuel sur une unité d'écran pouvant être intégrée dans une carrosserie du véhicule (28), ou dans lequel l'unité d'éléments lumineux (40) avec des éléments lumineux individuels est prévue sous forme d'agencement virtuel au moyen d'un dispositif de projection sur au moins une vitre de véhicule, ou dans lequel l'unité d'éléments lumineux (40) avec des éléments lumineux individuels est prévue sous forme d'agencement virtuel au moyen d'une unité de vitre de véhicule à écran interactif.

7. Système de contrôle (10) selon l'une quelconque des revendications précédentes, dans lequel l'unité d'émission/réception mobile (22) est sélectionnée parmi : un système de clé de véhicule à télécommande radio, un terminal mobile avec un programme d'unité d'émission/réception.

8. Véhicule (28), comprenant un système de contrôle (10) selon l'une quelconque des revendications 1 à 7.
